(19) Europäisches Patentamt
European Patent Office
Office européen des brevets

(11) **EP 2 984 434 B1**

(12) **FASCICULE DE BREVET EUROPEEN**

(45) Date de publication et mention
de la délivrance du brevet:
**15.11.2017 Bulletin 2017/46**

(21) Numéro de dépôt: **14717434.6**

(22) Date de dépôt: **07.04.2014**

(51) Int Cl.:
***F28D 20/00*** *(2006.01)*

(86) Numéro de dépôt international:
**PCT/EP2014/056956**

(87) Numéro de publication internationale:
**WO 2014/166882 (16.10.2014 Gazette 2014/42)**

(54) **SYSTEME DE STOCKAGE PAR VOIE THERMOCHIMIQUE A EFFICACITE DE STOCKAGE AMÉLIOREE**

THERMOCHEMISCHES SPEICHERSYSTEM MIT VERBESSERTER SPEICHEREFFIZIENZ

THERMOCHEMICAL STORAGE SYSTEM WITH IMPROVED STORAGE EFFICIENCY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2013 FR 1353192**

(43) Date de publication de la demande:
**17.02.2016 Bulletin 2016/07**

(73) Titulaire: **Commissariat à l'Énergie Atomique et aux Énergies Alternatives
75015 Paris (FR)**

(72) Inventeurs:
• **MINVIELLE, Zoé**
  **F-38000 Grenoble (FR)**
• **PARDO, Pierre**
  **46000 Cahors (FR)**
• **ROUGE, Sylvie**
  **F-38320 Brie Et Angonnes (FR)**

(74) Mandataire: **Brevalex
95, rue d'Amsterdam
75378 Paris Cedex 8 (FR)**

(56) Documents cités:
EP-A2- 0 726 432          WO-A1-99/53257
WO-A2-2011/054676      DE-A1-102012 204 722
FR-A1- 2 658 181          JP-A- S6 273 092
US-A- 4 054 126

**Description**

**DOMAINE TECHNIQUE ET ART ANTÉRIEUR**

La présente invention se rapporte à un système de stockage thermique par voie thermochimique à efficacité améliorée, en particulier pour une centrale solaire.

De nombreux domaines et de nombreuses applications industrielles mettent en oeuvre le stockage de chaleur. Le stockage de la chaleur permet la valorisation de la chaleur issue de processus industriels, la récupération d'énergie excédentaire ou le découplage entre le moment de production de l'énergie thermique et son utilisation.

A titre d'exemple, dans le domaine du solaire thermique à concentration (CSP pour "Concentrated Solar Power" en terminologie anglaise), l'excédent de chaleur produit aux heures à fort ensoleillement peut ainsi être stocké pour être exploité en fin de journée.

Le stockage de la chaleur peut être typiquement réalisé soit sous forme d'énergie sensible (en faisant varier le niveau de température d'un matériau de stockage solide ou liquide), sous forme d'énergie latente (en faisant changer de phase un matériau de stockage) ou enfin sous forme d'énergie chimique (en utilisant des réactions chimiques endothermiques et exothermiques).

Le stockage de chaleur faisant intervenir des réactions chimiques endothermiques et exothermiques est désigné "stockage thermochimique".

Les applications du stockage de l'énergie thermique par voie thermochimique sont par exemple les stockages haute température (par exemple entre 400°C et 550°C), longue durée et haute densité, par exemple de l'ordre de 500 $kWh/m^3$.

Une des réactions réversibles envisagée permettant un tel stockage est la réaction d'hydratation/déshydratation du couple $CaO/Ca(OH)_2$, sous forme solide, selon l'équation de réaction suivante :

$$Ca(OH)_2 + \Delta H_r \leftrightarrow CaO + H_2O,$$

$\Delta H_r$ étant l'enthalpie de la réaction.

Lors de la phase de charge, l'énergie thermique issue, par exemple d'un champ solaire; via un fluide caloporteur permet de déshydrater l'hydroxyde de calcium pour former de l'oxyde de calcium et de l'eau. Ces produits sont stockés pendant une durée indéterminée éventuellement à température ambiante. Ensuite, pour restituer l'énergie thermique emmagasinée, CaO et $H_2O$ sont mélangés et réagissent pour libérer la chaleur de réaction et régénérer l'hydroxyde de calcium. Cette énergie thermique est par exemple transmise à une turbine pour produire de l'électricité.

Les avantages liés au stockage de l'énergie thermique par voie thermochimique sont les suivants :

- il n'y a pas de pertes thermiques durant la phase de stockage des produits, ce qui permet d'envisager un stockage de durée illimitée ;
- le stockage offre une forte densité énergétique en raison des enthalpies de réaction importantes ;
- ce stockage offre la possibilité de stocker la chaleur et de la restituer en des lieux géographiques différents. Le transport des produits de stockage est possible en raison de la densité énergétique intéressante et de l'absence de pertes thermiques ;
- il est possible de restituer la chaleur à un même niveau de température que celle de sortie du champ solaire, ce qui permet par exemple à la turbine de fonctionner à son régime nominal.
- il est possible de conserver la quantité d'énergie stockée pour une température donnée.

Les procédés industriels impliquant une utilisation ou une conversion de l'énergie thermique au moyen d'un cycle thermodynamique, par exemple par l'utilisation d'une turbine à vapeur, font globalement intervenir deux niveaux de température qui sont les conditions aux bornes du cycle. Par exemple dans une centrale solaire, la différence entre ces deux niveaux température du fluide caloporteur entre l'entrée et la sortie du champ solaire est généralement d'au moins 200°C. Or les gammes de températures des réactions réversibles pouvant être mises en oeuvre pour le stockage par voie thermochimique sont de l'ordre de 200°C. Par exemple, dans le cas du couple $CaO/Ca(OH)_2$, la gamme de température de la réaction d'hydratation/déshydratation est [400°C ; 600°C], ce qui signifie que lorsque le caloporteur a une température inférieure à 400°C, il n'est plus possible de déshydrater le $Ca(OH)_2$ en CaO pour stocker de la chaleur, et qu'inversement il n'est pas possible de délivrer un fluide à une température supérieure à 600°C en fonctionnant à débit constant et pression constante de caloporteur à la charge et à la décharge.

Or dans le cas d'une centrale solaire à concentration dans laquelle le caloporteur est de la vapeur surchauffée en sortie du champ solaire, la température varie entre environ 250°C et environ 565°C. Par conséquent, soit la température du caloporteur lors de la décharge est largement inférieure à celle du caloporteur en entrée lors de la charge, soit une partie de l'énergie transportée par le caloporteur lors de la charge n'est pas stockée. Par conséquent, le système de stockage par voie thermochimique de l'état de la technique n'est pas optimal.

Le document WO2011/054676 décrit un dispositif de stockage de chaleur par voie thermochimique, mais ce document ne décrit pas de moyens pour assurer un stockage efficace lorsque le caloporteur présente une température qui présente un gradient de température important.

DE 10 2012 204 722 A1 divulgue un système de stockage thermique par voie thermochimique comportant plusieurs réacteurs successivement traversés par un fluide caloporteur, chaque réacteur étant destiné à être le siège d'une réaction réversible de stockage/déstockage par voie thermochimique, les réactions ayant lieu dans les plusieurs réacteurs ayant des gammes de température respectives distinctes.

## EXPOSÉ DE L'INVENTION

C'est par conséquent un but de la présente invention d'offrir un système de stockage par voie thermochimique permettant un stockage efficace sur une large gamme de température, i.e. permettant de stocker une grande partie de la chaleur transportée par le caloporteur et capable en phase de décharge de fournir un caloporteur à une température proche de celle du caloporteur en entrée du système de stockage lors de la phase de charge.

Le but précédemment énoncé est atteint par un système de stockage mettant en oeuvre au moins deux réactions de stockage/déstockage par voie thermochimique, les gammes de température de ces deux réactions étant complémentaires de sorte à couvrir sensiblement le différentiel de température du caloporteur, chaque réacteur étant connecté à des réservoirs d'entreposage des matériaux participant aux réaction par des conduits de connexion. Les réactions sont choisies en fonction des températures du caloporteur voulues, i.e. en fonction de la température du caloporteur avant stockage de la chaleur et de la température du caloporteur souhaitée lors de la libération de la chaleur.

En d'autres termes, les au moins deux réacteurs sont le siège de réactions de stockage thermochimique, les deux réactions ayant des gammes de température au moins en partie distinctes. Lors d'une phase de charge, le caloporteur traverse un réacteur contenant un premier matériau de stockage par voie thermochimique qui réagit dans la première gamme de température et stocke de la chaleur puis traverse un réacteur contenant un deuxième matériau de stockage par voie thermochimique qui réagit dans la deuxième gamme de température, la température du caloporteur est ainsi abaissée en au moins deux étapes. En phase de décharge, le caloporteur à échauffer traverse le réacteur avec le deuxième matériau et ensuite le réacteur avec le premier matériau. La température du caloporteur est ainsi augmentée en au moins deux étapes.

On entend dans la présente demande par "gamme de température", la plage de température dans laquelle les réactions endothermique et exothermique peuvent être mise en oeuvre dans de bonnes conditions, i.e. avec des cinétiques intrinsèques suffisamment rapides. Les bornes inférieure et supérieure de ces gammes de température sont déterminées à l'aide de données d'équilibre de la littérature.

Grâce à l'invention, il est possible de stocker par voie thermochimique la chaleur transportée par le caloporteur sur une gamme étendue de température, puisque les gammes de température des deux matériaux de stockage couvrent le gradient de température du caloporteur, la température du caloporteur en sortie du réacteur en phase de décharge peut alors être proche de celle du caloporteur en entrée du système en phase de charge.

Le système peut mettre en oeuvre plus de deux réactions de stockage par voie thermochimique en fonction du gradient de température que connaît le caloporteur alimentant le système de stockage.

Les réactions de charge/décharge peuvent être de différents types, il peut s'agir par exemple de dissociation catalytique, de déshydratation d'hydroxydes, de décarbonation de carbonates, de réformage de la vapeur ou de déshydrogénation d'hydrures métalliques.

Le système de stockage est particulièrement intéressant dans le cas où le caloporteur est de la vapeur surchauffée. En effet, du fait de la gamme étendue de température, il permet de stocker de la chaleur en désurchauffant la vapeur, en liquéfiant la vapeur et en refroidissant l'eau liquide.

La présente invention a alors pour objet un système de stockage thermique par voie thermochimique comportant au moins un premier réacteur et un deuxième réacteur et un circuit circulation d'un caloporteur, de sorte à assurer des échanges thermiques avec un contenu des premier et deuxième réacteurs, ledit circuit de circulation comportant une première et une deuxième extrémités d'alimentation/d'évacuation et traversant les deux réacteurs de sorte que le caloporteur traverse successivement l'un parmi le premier et le deuxième réacteur puis l'autre parmi le deuxième et le premier réacteur. Chaque réacteur est destiné à être le siège d'une réaction réversible de stockage/déstockage par voie thermochimique, les deux réactions ayant des gammes de température respectives au moins en partie distinctes, chaque réacteur étant connecté à des réservoirs d'entreposage des matériaux participant aux réaction par des conduits de connexion. De préférence, le caloporteur présente une première température à la première extrémité du circuit de circulation et une deuxième température à la deuxième extrémité du circuit de circulation différente de la première température, les gammes de température respectives des réactions réversibles de stockage/déstockage par voie thermochimique couvrant sensiblement l'intervalle de température délimité par les première et deuxième température.

Chaque conduit de connexion comporte avantageusement au moins un moyen de chauffage du matériau qui circule dans celui-ci lorsqu'il alimente le réacteur auquel il est connecté.

De manière préférentielle, un ou des moyens de chauffage sont formés au moins en partie par un échangeur thermique de sorte à récupérer la chaleur du ou des matériaux sortant du ou des réacteurs.

Dans un exemple de réalisation, au moins un échangeur thermique situé sur un conduit de connexion transportant du matériau vers le réacteur est relié à au moins un échangeur thermique situé sur un conduit de connexion évacuant du matériau ou des matériaux du réacteur résultant de la réaction ayant lieu dans le réacteur de sorte à transférer la chaleur récupérée de l'un des matériaux à l'autre matériau.

Le ou les réacteurs peut/peuvent être un ou des réacteurs à lit fluidisé.

La présente invention a également pour objet une centrale solaire comportant un champ solaire, un système de conversion de l'énergie thermique produite par le champ solaire en énergie électrique et au moins un système de stockage thermique selon l'invention, le système de conversion et le système de stockage étant connectés en parallèle avec le champ solaire.

La présente invention a également pour objet un procédé de charge ou de décharge par voie thermochimique, comportant les étapes :

- circulation d'un caloporteur entrant à une première température dans un premier réacteur de sorte à échanger de l'énergie thermique avec au moins un premier matériau de stockage thermique contenu dans le premier réacteur, de sorte à provoquer une première réaction de stockage/déstockage par voie thermochimique dans une première gamme de température,
- circulation dudit caloporteur dans un deuxième réacteur, après avoir circulé dans le premier réacteur, de sorte à échanger de l'énergie thermique avec au moins un deuxième matériau de stockage thermique contenu dans le second réacteur, de sorte à provoquer une deuxième réaction de stockage/déstockage par voie thermochimique dans une deuxième gamme de température au moins en partie distincte de la première gamme de température, le caloporteur porteur sortant du deuxième réacteur avec une deuxième température.

De préférence, en phase de charge le caloporteur traverse le premier réacteur dans lequel a lieu la réaction de stockage thermique dont la borne de température supérieure de la gamme de température de la première réaction est supérieure à la borne supérieure de la gamme de température de la deuxième réaction ayant lieu dans le deuxième réacteur, puis le deuxième réacteur.

De préférence, en phase de décharge le caloporteur traverse le deuxième réacteur dans lequel a lieu la réaction de stockage thermique dont la borne de température inférieure de la gamme de température de la deuxième réaction est inférieure à la borne inférieure de la gamme de température de la première réaction ayant lieu dans le premier réacteur, puis le premier réacteur.

En phase de charge, de préférence le au moins premier matériau de stockage destiné à stocker ou à libérer de la chaleur alimente en continu le premier réacteur et les produits issus de la réaction sont évacués en continu. De préférence, le au moins deuxième matériau de stockage destiné à stocker ou à libérer de la chaleur alimente en continu le deuxième réacteur et les produits issus de la réaction sont évacués en continu.

En phase de charge, la température du caloporteur en sortie du premier réacteur étant supérieure à celle en sortie du deuxième réacteur, de manière très avantageuse, la température du caloporteur en sortie du premier réacteur est supérieure ou égale à la borne de température inférieure de la gamme de température de la première réaction et/ou la température du caloporteur en sortie du deuxième réacteur est supérieure ou égale à la borne de température inférieure de la gamme de température de la deuxième réaction

En phase de décharge, la température du caloporteur en sortie du premier réacteur étant supérieure à celle en sortie du deuxième réacteur, de manière également très avantageuse, la température du caloporteur en sortie du deuxième réacteur est inférieure ou égale à la borne de température supérieure de la gamme de température de la deuxième réaction et/ou la température du caloporteur en sortie du premier réacteur est inférieure ou égale à la borne de température supérieure de la gamme de température de la première réaction

De préférence, le au moins premier matériau et le au moins deuxième matériau sont chauffés avant d'entrer dans le premier et le deuxième réacteur respectivement.

Les réactions pouvant avoir lieu dans les réacteurs sont par exemple une réaction de dissociation catalytique, une réaction de déshydratation d'hydroxyde, une réaction de décarbonation de carbonates, une réaction de réformage de la vapeur ou une réaction de déshydrogénation d'hydrure métallique.

Par exemple, le caloporteur s'écoulant dans le circuit de circulation en phase de charge a une température d'entrée de 565°C et de sortie de 300°C, et le premier réacteur (8) est le siège de la réaction d'hydratation/déshydratation

$Ca(OH)_2 + Q \Leftrightarrow CaO + H_2O$ dont la gamme de température est [400°C, 600°C], et
le deuxième réacteur (8) est le siège de la réaction d'hydratation/déshydratation
$Mg(OH)_2 + Q' \Leftrightarrow MgO + H_2O$ dont la gamme de température est [150°C, 350°C].

## BRÈVE DESCRIPTION DES DESSINS

La présente invention sera mieux comprise à l'aide de la description qui va suivre et des dessins en annexes sur lesquels:

- la figure 1A est une représentation schématique d'un exemple de réalisation d'un système de stockage mettant en oeuvre deux réactions en phase de charge,
- la figure 1B est une représentation schématique du système de la figure 1A en phase de décharge,
- la figure 1C est une représentation graphique de la variation de température du caloporteur dans le système de la figures 1A, en fonction de l'inverse du temps 1/t,
- la figure 1D est une représentation graphique de la variation de température du caloporteur dans le système de la figures 1B en fonction du temps,
- la figure 2A est une représentation schématique d'un exemple de réalisation d'un système de stockage mettant en oeuvre n réactions en phase de charge, et la représentation graphique des variations de température du caloporteur dans le système en fonction de l'inverse du temps 1/t,
- la figure 2B est une représentation schématique du système de la figure 2A en phase de décharge, et la représentation graphique des variations de température du caloporteur dans le système en fonction du temps t,
- la figure 3 est une représentation schématique d'un système de stockage selon l'invention dans le cas où le caloporteur est de la vapeur d'eau surchauffée en phase de charge,
- la figure 4 une représentation schématique du système de stockage de la figure 3 en phase de décharge,
- la figure 5 est une représentation schématique d'une centrale solaire dans laquelle un système de stockage selon l'invention peut être mis en oeuvre.

## EXPOSÉ DÉTAILLÉ DE MODES DE RÉALISATION PARTICULIERS

Dans la description qui va suivre, les termes "charge" et "stockage" seront utilisés indifféremment" et les termes "décharge" et "déstockage" seront utilisés indifféremment".

En outre, dans la description qui va suivre, le système de stockage sera décrit dans une application à une centrale solaire, mais le système de stockage peut être mis en oeuvre dans toute installation nécessitant un stockage de chaleur de plus ou moins longue durée et pouvant présenter des différentiels de température importants.

De plus, le caloporteur qui sera considéré pour la description est l'eau, mais d'autres caloporteurs peuvent être utilisées: l'air, l'huile, les sels fondus, un gaz inerte, l'azote, l'hélium, etc.

Enfin, pour plus de simplicité, l'expression "matériau de stockage thermique" désigne à la fois le matériau qui est prêt à réagir pour libérer de la chaleur (phase de déstockage) et le matériau qui est prêt à réagir pour emmagasiner de la chaleur (phase de stockage). Par exemple, dans le cas où le couple $CaO/Ca(OH)_2$ est utilisé, le matériau de stockage désigne à la fois le CaO et le $Ca(OH)_2$.

Le caloporteur est distinct des matériaux participant aux réactions dans les premier et deuxième réacteurs.

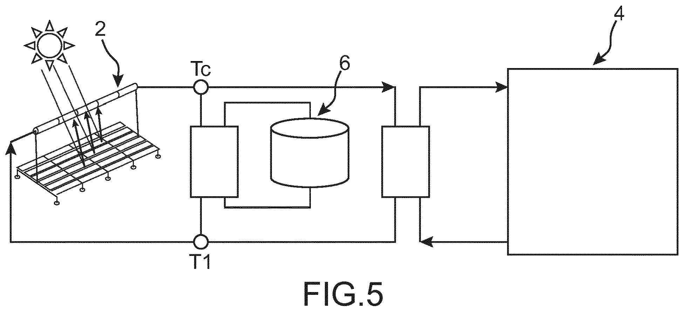

Sur la figure 5, on peut voir représentée schématiquement une centrale solaire mettant en oeuvre un système de stockage thermique selon l'invention.

La centrale solaire comporte un champ solaire 2, un système de conversion 4 de l'énergie thermique en une autre énergie, par exemple il s'agit d'une turbine produisant de l'électricité, et un système de stockage thermique 6.

La turbine 4 est connectée à la sortie et à l'entrée du champ solaire de sorte à être alimentée en caloporteur chaud par celui-ci et à renvoyer le caloporteur refroidi en entrée du champ solaire 2. Le système de stockage thermique 6 est connecté en parallèle avec la turbine 4 et le champ solaire 6. Des moyens de commutation sont prévus dans le circuit de sorte que le champ solaire 2 puisse alimenter la turbine 4 et/ou le système de stockage thermique 6 et le système de stockage thermique 6 puisse alimenter la turbine 4.

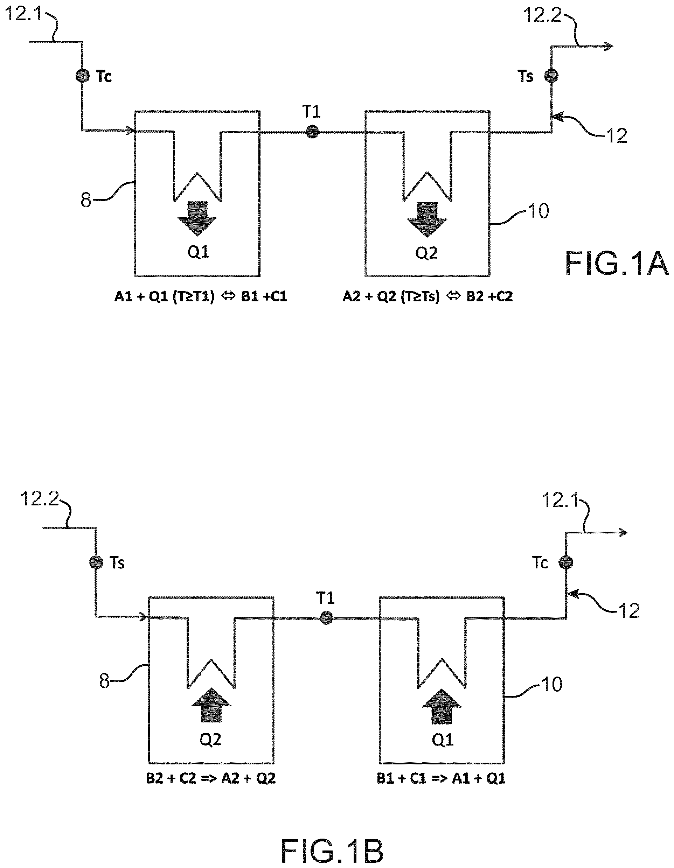

Sur les figures 1A et 1B, on peut voir une représentation schématique d'un exemple de réalisation d'un système de stockage comportant un premier réacteur 8 et un deuxième réacteur 10 traversés en série par le circuit de circulation 12 du caloporteur. Le circuit d'alimentation comporte deux extrémités 12.1, 12.2 d'alimentation/d'évacuation en caloporteur; l'extrémité 12.1 sert à l'alimentation en phase de charge et à l'évacuation en phase de décharge, et l'extrémité 12.2 sert à l'évacuation en phase de charge et à l'alimentation en phase de décharge.

Tc désigne la température chaude du caloporteur, qui est en phase de charge la température du caloporteur en entrée du système de stockage et en sortie du champ solaire, et qui est en en phase de décharge la température en sortie du système de stockage et en entrée de la turbine.

Ts désigne la température froide du caloporteur qui est en phase de charge la température du caloporteur en sortie du système de stockage et en entrée du champ solaire, et qui est en en phase de décharge la température en entrée du système de stockage et en sortie de la turbine.

A des fins de simplicité, nous considérons dans cet exemple que la température de sortie du caloporteur en phase de décharge est la même que celle du caloporteur en entrée du système en phase de charge. Nous verrons par la suite un exemple dans lequel la température du caloporteur en sortie en phase de décharge est inférieure à celle du caloporteur en entrée en phase de charge.

Le premier réacteur 8 est rempli d'un matériau de stockage A1 présentant une gamme de température de stockage thermochimique [T1, Tc]. Il est traversé par le circuit de circulation du caloporteur 12 qui est tel qu'il présente une grande surface d'échange thermique avec le matériau de stockage A1. Par exemple, il comporte des ailettes.

La réaction est la suivante:

$$A1 + Q1 \leftrightarrow B1 + C1 \qquad (R1)$$

Q1 étant l'énergie requise pour la réaction et B1 et C1 étant les produits de transformation endothermique de A1.

Cette réaction est réversible, la réaction de B1 et C1 est exothermique, produisant de la chaleur et le matériau A1.

Le deuxième réacteur 10 est rempli d'un matériau de stockage A2 présentant une gamme de température de stockage thermochimique [Ts, T1]. Il est traversé par le circuit de circulation du caloporteur qui est tel qu'il présente une grande surface d'échange thermique avec le matériau de stockage A2.

La réaction est la suivante:

$$A2 + Q2 \leftrightarrow B2 + C2 \qquad (R2)$$

Q2 étant l'énergie requise pour la réaction et B2 et C2 étant les produits de transformation endothermique de A2.

Cette réaction est réversible, la réaction de B2 et C2 est exothermique, produisant de la chaleur et le matériau A2.

Cet exemple décrit un exemple dans lequel les gammes de température des réactions R1 et R2 sont juste complémentaires, et n'ayant en commun que la température T1. Mais comme nous le verrons par la suite, ces gammes de température peuvent se chevaucher ou être complètement disjointes. En effet la gamme de température de la réaction R2 pourrait être [Ts, T2] avec T2 < T1, ce qui est par exemple le cas lorsque les réactions $CaO/Ca(OH)_2$ et $MgO/Mg(OH)_2$ sont mises en oeuvre.

Le fonctionnement du système de stockage va maintenant être décrit.

En phase de charge, le système de stockage est alimenté en caloporteur par le champ solaire à une température Tc. Le caloporteur traverse tout d'abord le premier réacteur 8. La température du caloporteur correspond à la gamme de température du matériau A1, qui est préalablement réchauffé à la température T1. Le caloporteur cède une quantité de chaleur Q1 au matériau A1, qui est suffisante pour qu'il réagisse selon la réaction R1 et se transforme en B1 et C1. Ainsi, en cédant la quantité de chaleur Q1, le caloporteur voit sa température s'abaisser de Tc à T1.

T1 est fixée de préférence de sorte à correspondre à la température limite à partir de laquelle la réaction endothermique R1 ne peut plus se faire. Ainsi on optimise le stockage avec le matériau A1.

Le caloporteur entre ensuite dans le deuxième réacteur 10 à la température T1, il cède une quantité de chaleur Q2 au matériau A2, qui a été préalablement échauffé à la température Ts, celui-ci réagit selon la réaction R2 et se transforme en B2 et C2. En cédant la quantité de chaleur Q2, le caloporteur voit sa température s'abaisser de T1 à Ts. Le caloporteur sort alors du deuxième réacteur à la température Ts. Le caloporteur est alors renvoyé dans le champ solaire pour être à nouveau échauffé. Ts est choisie supérieure ou égale à la borne inférieure de la gamme de température de la réaction R2, et de préférence le plus proche de cette borne inférieure afin de stocker le maximum de chaleur.

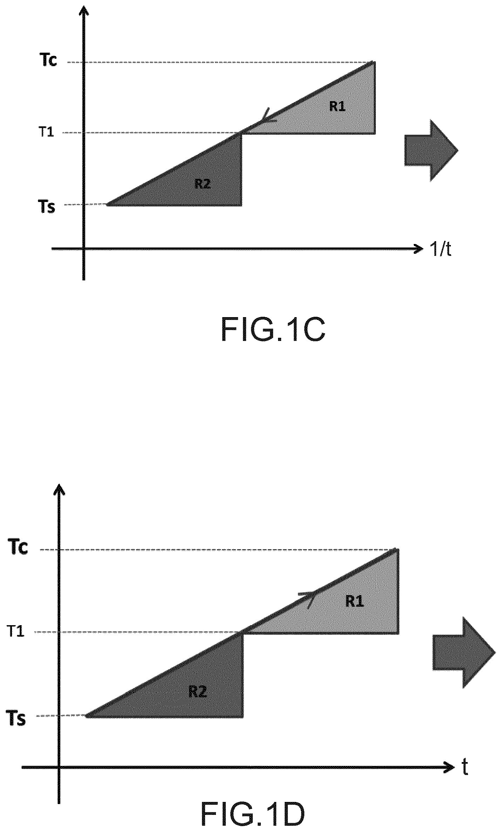

La figure 1C représente graphiquement la variation de température du caloporteur au cours de sa traversée des deux réacteurs 8, 10 en phase de charge.

En phase de décharge, i.e. une phase de récupération de la chaleur stockée, le caloporteur entre à la température Ts dans le deuxième réacteur 10 qui est alimenté en matériau B2 et C2, qui sont préalablement réchauffés à la température T1. Ts étant fixée supérieure ou égale à la borne inférieure de la gamme de température de la réaction R2, la réaction R2 peut avoir lieu dans le sens de la génération de A2 et de libération de chaleur Q2 qui est cédé au caloporteur qui sort alors du deuxième réacteur 10 à la température T1.

Ensuite, le caloporteur à la température T1 entre dans le premier réacteur 8, sa température est dans la gamme de température de la première réaction R1. Le premier réacteur est alimenté 8 en matériau B1 et C1 préalablement réchauffés à la température Tc, ils réagissent suivant la réaction R1 et génèrent A1 et de la chaleur Q1 qui est cédée au caloporteur qui sort alors à la température Tc. Le caloporteur est alors envoyé à la turbine.

La figure 1D représente graphiquement la variation de température du caloporteur au cours de sa traversée des deux réacteurs 8, 10 en phase de décharge.

Dans le fonctionnement décrit ci-dessus, les conditions de pression et de débit sont conservées entre la phase de charge et la phase de décharge. Mais il peut être envisagé de modifier le débit et/ou la pression du caloporteur entre les deux phases ce qui permet de moduler la température du caloporteur en sortie. Néanmoins dans le cas d'une centrale solaire, on cherche à obtenir des fonctionnements dans des conditions de température les plus stables possibles, notamment pour assurer un fonctionnement optimal de la turbine et limiter les sollicitations du champ solaire.

En variante, il pourrait être envisagé qu'une partie de la chaleur du caloporteur au sein du réacteur soit utilisée pour échauffer le ou les matériaux de stockage au lieu de les échauffer avant leur entrée dans le réacteur. Ce serait alors les rendements et les températures de sortie du caloporteur qui différeraient.

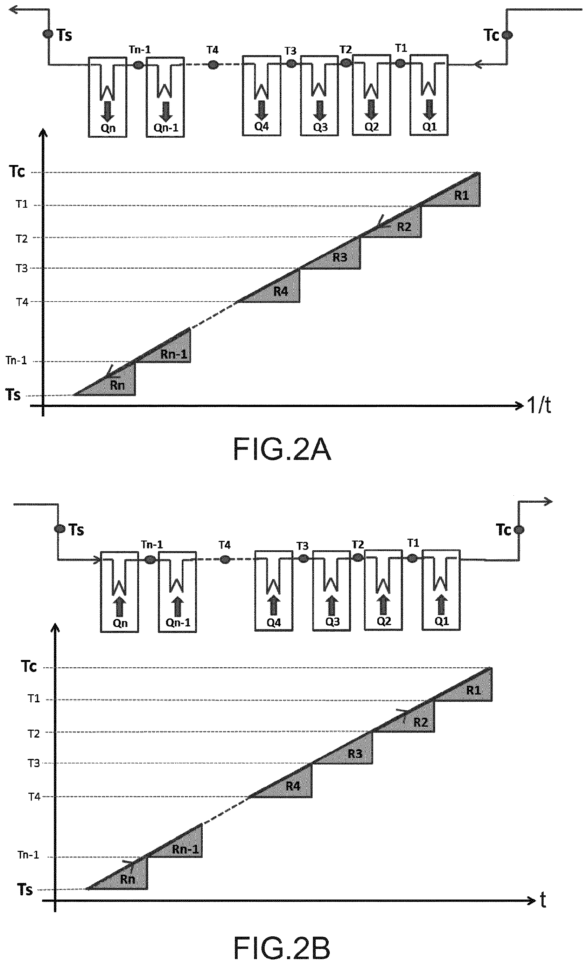

Sur les figures 2A et 2B, on peut voir une représentation schématique d'un système de stockage thermique par voie thermochimique comportant n réacteurs et un circuit de circulation du caloporteur 12 traversant successivement les n réacteurs, de sorte que le caloporteur traverse dans un sens les n réacteurs en phase de charge et dans un sens opposé les n réacteurs en phase de décharge. Les n réacteurs contiennent chacun un matériau de stockage thermique présentant une gamme de température de sorte que les gammes de température couvrent l'intervalle de variation de température du caloporteur. Sont également représentées les représentations graphiques de la variation de température du caloporteur en phase de charge et de décharge respectivement lors de la traversée des n réacteurs. Le nombre de réacteurs, le nombre et le type de réactions mis en oeuvre sont choisis en fonction de l'intervalle de température [Ts, Tc] à couvrir afin d'optimiser le stockage de la chaleur et sa récupération. Dans chaque réacteur, en phase de charge une partie de l'énergie thermique transportée par le caloporteur est stockée jusqu'à ce que le caloporteur atteigne sa température basse et en phase de décharge, chaque réacteur cède l'énergie qu'il a stockée et échauffe progressivement le caloporteur jusqu'à ce qu'il atteigne sa température haute.

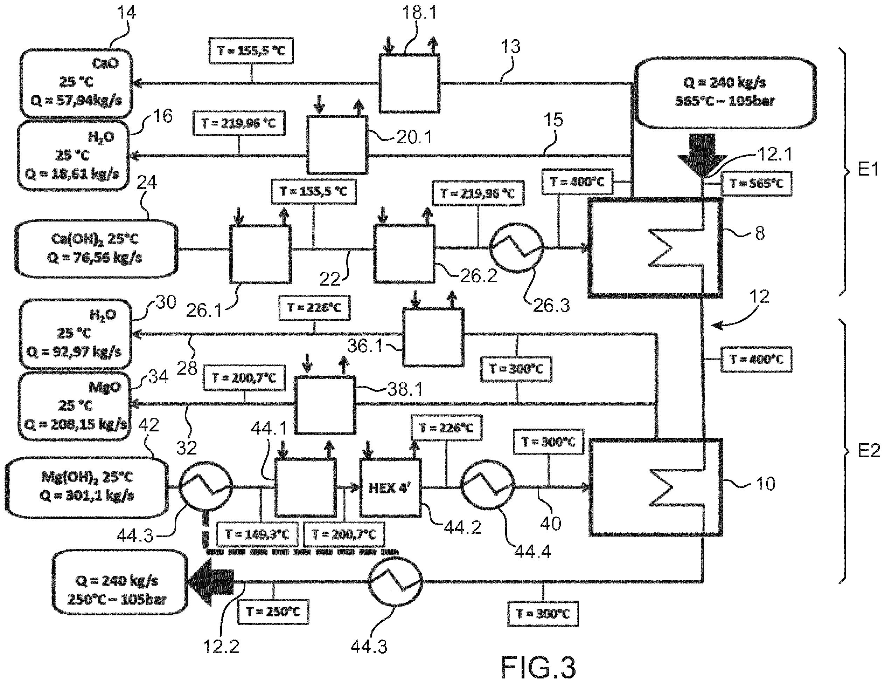

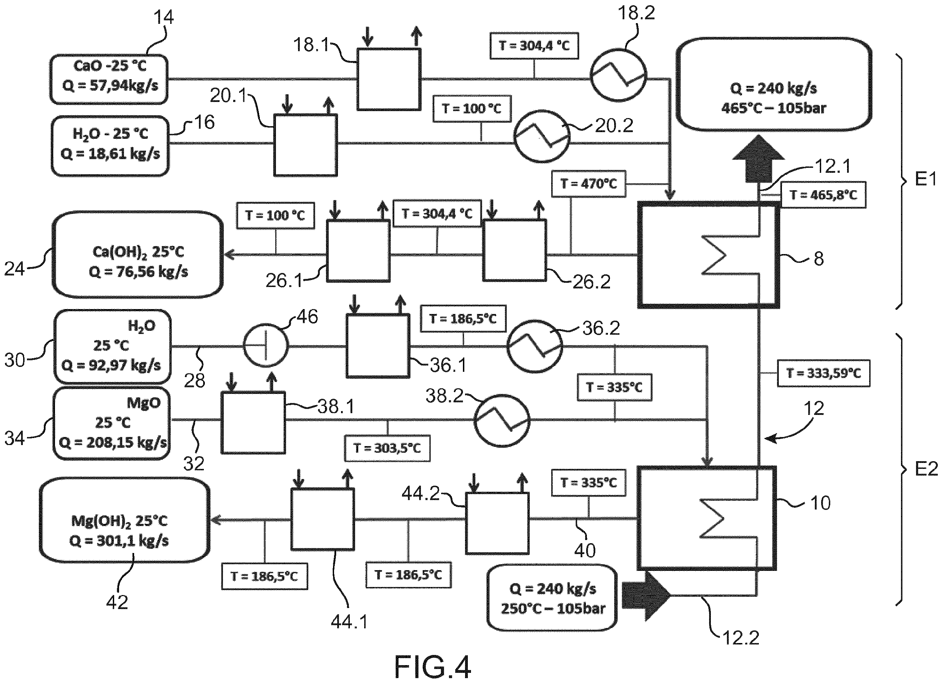

Nous allons maintenant décrire un exemple de réalisation pratique d'un système de stockage selon l'invention utilisant de l'eau comme caloporteur et mettant en oeuvre des réactions de déshydration/hydratation d'hydroxyde. Le débit de caloporteur est de 240Kg/s à une pression de 105 Bar. Celui-ci est représenté sur les figures 3 et 4.

Les réactions réversibles mises en oeuvre sont :

$Ca(OH)_2 + Q \Leftrightarrow CaO + H_2O$ dont la gamme de température est [400°C, 600°C], réaction désignée RCa;
$Mg(OH)_2 + Q' \Leftrightarrow MgO + H_2O$ dont la gamme de température est [150°C, 350°C], réaction désignée RMg.

Les dispositifs de chauffage qui seront décrits ci-dessous sont représentés sur les figures 3 et 4 soit en phase de charge, soit en phase de décharge, i.e. lorsqu'ils fournissent un chauffage, sinon ils ne sont pas représentés. Par exemple, le dispositif de chauffage désigné 18.2 sur la figure 4 chauffe le CaO en phase de décharge, il est donc représenté, alors qu'en phase de charge, il ne délivre par de chaleur, il n'est alors pas représenté sur la figure 3.

Le système de stockage comporte deux étages E1, E2 connectés en série. Les conditions de connexion des réservoirs d'entreposage des matériaux participant aux réactions de stockage et déstockage thermique sont distincts du circuit de circulation du caloporteur.

Le réacteur comporte un réacteur 8, siège de la réaction réversible RCa, et un deuxième réacteur 10 siège de la réaction réversible RMg. Le circuit de circulation de caloporteur traverse en série les deux réacteurs 8, 10.

L'étage E1 comporte le réacteur 8, qui est connecté par une connexion 13 à un réservoir 14 d'eau liquide stockée à 25°C et par une connexion 15 à un réservoir 16 de CaO stocké à 25°C. Des moyens (non représentés) sont prévus pour assurer le transport de l'eau et du CaO des réservoirs 14 et 16 vers le réacteur 8 en phase de décharge et du réacteur vers les réservoirs 14 et 16 en phase de charge. Ces moyens sont par exemple formés par des pompes, des vis sans fin, des tapis, des veines pneumatiques.

Des moyens de séparation de l'eau et du CaO sont également prévus entre le réacteur 8 et les réservoirs 14 et 16 en phase de charge afin de séparer l'eau et le CaO et les envoyer chacun dans leur réservoir. Ils peuvent être formés par exemple par un condenseur, un cyclone, un filtre,...

La connexion 13 comporte au moins des moyens de chauffage du CaO avant qu'il n'alimente le réacteur en phase de charge.

De manière particulièrement avantageuse, les moyens de chauffage sont formés en partie par un échangeur thermique 18.1 qui permet à la fois de chauffer le CaO lorsqu'il alimente le réacteur 8 et de récupérer de la chaleur lorsqu'il sort du réacteur 8. En outre, dans l'exemple représenté, les moyens de chauffage comportent également un dispositif de chauffage 18.2 pour fournir l'énergie supplémentaire pour que l'eau atteigne la T° du réacteur 8, environ 470°C.

L'échangeur thermique 18.1 est connecté à un autre échangeur thermique qui sera décrit ci-dessous.

La connexion 15 comporte des moyens de chauffage de l'eau avant qu'elle n'alimente le réacteur en phase de décharge.

De manière particulièrement avantageuse, les moyens de chauffage sont formés par un échangeur thermique 20.1 qui permet à la fois de chauffer l'eau lorsqu'elle alimente le réacteur 8 et de récupérer de la chaleur de l'eau lorsqu'elle sort du réacteur 8. En outre, dans l'exemple représenté, les moyens de chauffage comportent également un dispositif de chauffage 20.2 pour fournir l'énergie supplémentaire pour que le CaO atteigne la T° du réacteur 8, environ 470°C.

Le premier réacteur est également connecté par une connexion 22 à un réservoir 24 de $Ca(OH)_2$ stocké à 25°C. Des moyens de transport similaires à ceux décrits ci-dessus sont prévus dans la connexion 22 pour transporter le $Ca(OH)_2$ entre le réservoir 24 et le réacteur 8.

Des moyens de chauffage sont prévus sur la connexion 8 pour chauffer le $Ca(OH)_2$ avant qu'il n'alimente le réacteur 8.

De manière avantageuse, ces moyens de chauffage comportent au moins un échangeur thermique. De manière particulièrement avantageuse, les moyens de chauffage comportent deux échangeurs thermiques 26.1, 26.2 et un dispositif de chauffage 26.3 supplémentaire, par exemple électrique. En considérant le sens de circulation du réservoir 24 vers le réacteur 8, sont disposés dans cet ordre, l'échangeur 26.1, l'échangeur 26.2 et le dispositif de chauffage 26.3. L'échangeur 26.1 est relié à l'échangeur 18.1 et l'échangeur 26.2 est relié à l'échangeur 20.1. Le dispositif de chauffage 26.3 apporte l'énergie nécessaire pour que le $Ca(OH)_2$ entrant soit à la température du réacteur 8 après qu'il ait traversé les deux échangeurs 26.1, 26.2.

L'étage E2 a une structure similaire à celle de l'étage E1.

L'étage E2 comporte le réacteur 10, siège de la réaction réversible RMg.

Le réacteur 10 est connecté par une connexion 28 à un réservoir 30 d'eau liquide stockée à 25°C et par une connexion 32 à un réservoir 34 de MgO stocké à 25°C. Des moyens (non représentés) sont prévus pour assurer le transport de l'eau et du MgO du réservoir 30 et 34 vers le réacteur 10 en phase de décharge et du réacteur vers les réservoirs 30 et 34 en phase de charge. Ces moyens sont similaires à ceux décrits pour l'étage E1.

Des moyens de séparation de l'eau et du MgO sont également prévus entre le réacteur 10 et les réservoirs 30 et 34 en phase de charge afin de séparer l'eau et le MgO et les envoyer chacun dans leur réservoir. Ceux-ci sont similaires à ceux mis en oeuvre dans l'étage E1.

La connexion 28 comporte des moyens de chauffage de l'eau avant qu'elle alimente le réacteur en phase de décharge.

De manière particulièrement avantageuse, les moyens de chauffage sont formés par un échangeur thermique 36.1 qui permet à la fois de chauffer l'eau lorsqu'elle alimente le réacteur 10 et de récupérer de la chaleur lorsqu'elle sort du réacteur 10. Un dispositif de chauffage complémentaire 36.2 est prévu pour amener l'eau à 335°C.

L'échangeur thermique 36.1 est connecté à un autre échangeur thermique qui sera décrit ci-dessous.

La connexion 32 comporte des moyens de chauffage du MgO avant qu'il n'alimente le réacteur en phase de charge.

De manière particulièrement avantageuse, les moyens de chauffage sont formés par un échangeur thermique 38.1 qui permet à la fois de chauffer le MgO lorsqu'il alimente le réacteur 10 et de récupérer de la chaleur lorsqu'il sort du réacteur 10. Un dispositif de chauffage complémentaire 38.2 est prévu pour amener le MgO à 335°C.

Le premier réacteur est également connecté par une connexion 40 à un réservoir 42 de $Mg(OH)_2$ stocké à 25°C. Des moyens de transport similaires à ceux décrits ci-dessus sont prévus dans la connexion 40 pour transporter le $Mg(OH)_2$ entre le réservoir 42 et le réacteur 10.

Des moyens de chauffage sont prévus sur la connexion 40 pour chauffer le $Mg(OH)_2$ avant qu'il n'alimente le réacteur 10.

De manière avantageuse, ces moyens de chauffage comportent au moins un échangeur thermique. De manière particulièrement avantageuse, les moyens de chauffage comporte deux échangeurs thermiques 44.1, 44.2 et deux dispositifs de chauffage 44.3, 44.4 supplémentaires, par exemple électrique. En considérant le sens de circulation du réservoir 42 vers le réacteur 10, sont disposés dans cet ordre, le dispositif de chauffage 44.3, l'échangeur 44.1, l'échangeur 44.2 et le dispositif de chauffage 44.4. L'échangeur 44.1 est relié à l'échangeur 36.1 et l'échangeur 44.2 est relié à l'échangeur 38.1.

De préférence des moyens 46 sont prévus en sortie du réservoir de stockage d'eau 30 afin d'augmenter sa pression et permettre la réaction RMg à une température donnée. Il s'agit par exemple d'une pompe.

Dans l'exemple représenté et de manière préférée, le dispositif de chauffage 44.3 est au moins en partie formé par un échangeur thermique avec le caloporteur sortant du réacteur 10 à 300°C. Il pourrait être formé par une résistance électrique

Le dispositif de chauffage 44.4 apporte l'énergie complémentaire pour que le $Mg(OH)_2$ entrant soit à la température du réacteur 10.

Le fonctionnement du système de stockage des figures 3 et 4 va maintenant être décrit.

En phase de charge représentée sur la figure 3, l'eau sortant du champ solaire est sous forme de vapeur surchauffée à 565°C, elle traverse le réacteur 8 qui est alimenté en $Ca(OH)_2$. Le caloporteur cède de la chaleur qui provoque la déshydratation du $Ca(OH)_2$, générant du CaO et de l'eau vapeur.

Le $Ca(OH)_2$, avant d'entrer dans le réacteur 8 est échauffé en traversant l'échangeur 26.1, il atteint alors la température de 155,5°C, en traversant l'échangeur 26.3, il atteint la température de 219,96°C et en traversant le dispositif de chauffage 26.3, il atteint la température de 400°C permettant à la réaction de déshydratation d'avoir lieu.

Simultanément, le CaO et l'eau produite sont évacués vers leur réservoir respectif 16, 14. Ils sortent du réacteur 8 à une température de 400°C et sont destinés à être stockés à 25°C. La chaleur qu'il transporte est alors récupérée par les échangeurs thermiques 18.1, 20.1 cette chaleur servant à échauffer le $Ca(OH)_2$.

Ensuite, le caloporteur sort du réacteur 8 à une température de 400°C et traverse le réacteur 10. Sa température est suffisante pour provoquer la déshydratation du $Mg(OH)_2$.

Le réacteur 10 est alimenté en $Mg(OH)_2$ qui est progressivement échauffé par les échangeurs thermiques 44.1, 44.2 et les dispositifs de chauffage 44.3, 44.4. Il entre dans le réacteur 10 a une température de 300°C.

Simultanément, le MgO et l'eau produits sont évacués vers les réservoirs 34, 30 respectivement. En sortie du réacteur 10, leur température est 300°C.

Ces matériaux étant destinés à être stockés à 25°C, la chaleur qu'ils transportent en sortant du réacteur est récupérée via les échangeurs 38.1, 36.1 et est transmise aux échangeurs 44.2, 44.1 respectivement.

Le caloporteur sortant du réacteur 10 est à une température de 300°C et cède de la chaleur pour échauffer le $Mg(OH)_2$. Il a alors une température de 250°C et est renvoyé vers le champ solaire. Le caloporteur à 250°C étant à une pression de 105 Bar, il est sous forme liquide.

Lors de la phase de décharge représentée sur la figure 4, le caloporteur alimente le réacteur 10, il est à une température de 250°C.

Le réacteur 10 est alimenté en MgO et en eau liquide. Le MgO et l'eau sont échauffés par les échangeurs thermiques et les dispositifs de chauffage jusqu'à une température de 335°C avant d'entrer dans le réacteur 10.

De préférence, une partie de l'eau est amenée à une pression de 55 Bar pour permettre d'atteindre une température d'hydratation du MgO supérieure à 335°C.

Le MgO est hydraté produisant du $Mg(OH)_2$ et de la chaleur. Le caloporteur est échauffé et sort du réacteur 10 à une température de 333,59°C. Le $Mg(OH)_2$ est transféré dans le réservoir de stockage 42. Il est rappeler que lors de la phase de charge, la réaction de déshydratation du $Mg(OH)_2$ se fait de 400°C à 300°C, l'énergie libérée correspond sensiblement à ce différentiel de température.

Le caloporteur entre ensuite dans le réacteur 8 qui est alimenté en CaO et en eau provenant des réservoirs 16 et 14 respectivement et préalablement chauffés Le CaO et l'eau sont préchauffés à 470°C. La réaction d'hydratation démarre donc, le CaO est hydraté et produit du $Ca(OH)_2$ et de la chaleur, cette chaleur permettant de réchauffer le caloporteur de 333,59°C à 465,8°C. Contrairement à la réaction endothermique de déshydratation, ce n'est pas le caloporteur qui amène la chaleur nécessaire à la réaction.

Le $Ca(OH)_2$ est transféré dans le réservoir de stockage 24 et le caloporteur sort du réacteur 8 à une température de 465°C.

Il sera compris que la phase de charge est continue pour stocker la chaleur transportée par le caloporteur qui circule en continu. L'alimentation des réacteurs 8, 10 en $Mg(OH)_2$ et en $Ca(OH)_2$ se fait alors en continu, ainsi que le stockage de MgO, de CaO et d'eau produits.

De même, la phase de décharge est continue pour chauffer le caloporteur qui traverse en continu les réacteurs 8, 10. L'alimentation en CaO et en MgO des réacteurs 8, 10 est alors continue.

Par ailleurs, le système ,qui a été décrit, fonctionne à la même pression et le même débit de caloporteur en phase de charge et en phase de décharge. Mais il pourrait être prévu de travailler à plus faible débit de caloporteur en phase de décharge par rapport à la phase de charge afin d'atteindre une température de caloporteur chaud en sortie encore plus proche de celle du caloporteur chaud en entrée du système de stockage.

Il sera compris que les valeurs de température sont données à titre d'exemple non limitatif. D'autres choix de températures pourrait être faits pour le stockage et déstockage par déshydratation/hydratation au moyen du $Mg(OH)_2$ et le $Ca(OH)_2$.

La mise en oeuvre des échangeurs thermiques permettent de récupérer la chaleur des produits sortant des réacteurs. On optimise donc la récupération d'énergie. Dans l'exemple décrit sur les figures 3 et 4 et dans les conditions données à titre d'exemple, toute l'énergie du caloporteur a été utilisée et 90% de l'énergie a été stockée.

A titre de comparaison, nous allons calculer le Fill Factor du système de stockage selon l'invention et celui d'un système de stockage mettant en oeuvre un seul matériau de stockage, ainsi que la température de restitution du fluide.

Le Fill Factor FF est défini par la relation ci-dessous :

$$FF = \text{Energie déstockée au fluide caloporteur lors de la décharge/}$$
$$\text{(Energie disponible dans le fluide caloporteur lors de la charge + Energie consommée}$$
$$\text{dans les processus de charge et de décharge)}$$

En se plaçant dans les conditions de l'exemple du système de stockage des figures 3 et 4; i.e. avec un débit de caloporteur de 240 kg/s, un caloporteur chaud en entrée à 565°C à une pression de 105 Bar et un caloporteur froid en entrée à 250°C à 105 Bar et des matériaux stockés à 25°C, le FF du système de stockage selon l'invention, est égal à 57,3% et la température de restitution est égale à 465°C.

Alors que dans le cas d'un système de stockage mettant en oeuvre la réaction réversible RCaO pour un caloporteur chaud de 565°C à 105 bar en entrée et un caloporteur froid en entrée à 250°C à 105 Bar, le FF est égal à 16,97% et la température de restitution est égale à 314,6°C.

Grâce à la présente invention, le FF du système de stockage est multiplié par 3 par rapport au FF d'un système de stockage à une seule réaction. En outre, la température du caloporteur en sortie du système en phase de décharge peut être proche de celle du caloporteur chaude en phase de charge.

Par conséquent, le système de stockage selon l'invention mettant en oeuvre plusieurs réactions thermochimiques successives permet de stocker une quantité de chaleur sensiblement plus importante qu'un système de stockage à une seule réaction et d'échauffer un caloporteur à une température sensiblement plus proche que la température du caloporteur chaude en entrée qu'un système de stockage à une seule réaction.

Le système de stockage, tel que représenté sur les figures 3 et 4, est particulièrement avantageux puisqu'il est tel qu'il récupère l'énergie des produits sortants dans les réacteurs via les échangeurs thermiques. Mais un système ne prévoyant pas une telle récupération ne sort pas du cadre de la présente invention.

Les gammes de températures des réactions réversibles peuvent se chevaucher ou non. Le système de stockage selon la présente invention peut mettre en oeuvre des réactions réversibles de même type tel que la déshydratation/hydratation d'hydroxyde. Il peut mettre en oeuvre des réactions de différents types, par exemple on peut associer la réaction de déshydratation/hydratation $Mg(OH)_2$/MgO dont la gamme de température est [150°C , 350°C], et une réaction de dissociation catalytique tel que le $NH_3/N_2$ dont la gamme de température est [400°C , 500°C]. Dans cet exemple, les gammes de températures ne se chevauchent pas.

La réaction de dissociation catalytique du $NH_3$ est

$$2NH_3 \Leftrightarrow N_2 + 3H_2$$

Dans un autre exemple, on peut associer la réaction de déshydratation/hydratation $Ca(OH)_2$/CaO dont la gamme de température est [400°C, 600°C] et le reformage de la vapeur suivant la réaction $CH_4 + H_2O \Leftrightarrow 3H_2 + CO$ dont la gamme de température est [550°C, 950°C]. Dans cet exemple, les gammes de températures se chevauchent.

La structure du système de stockage, en particulier la structure des deux étages sont de réalisation similaire à ceux décrits sur les figures 3 et 4 ou est adaptée de manière connue de l'homme du métier en fonction du type de réaction mis en oeuvre. Par exemple, dans le cas du reformage de l'eau suivant la réaction $CH_4 + H_2O \Leftrightarrow 3H_2 + CO$, le réacteur est connecté à quatre réservoirs, un réservoir stockant le $CH_4$, un réservoir stockant l'eau, un réservoir stockant l'hydrogène et un réservoir stockant le CO. Dans le cas de réaction catalytique, on peut prévoir de stocker les réactifs et les matériaux de stockage thermique sans catalyseur. Dans ce cas les réactions ne se produiront pas. Le catalyseur est introduit lorsque l'on souhaite que la réaction ait lieu.

Dans le tableau ci-dessous sont regroupées des réactions pouvant être mises en oeuvre dans un système de stockage selon l'invention à titre d'exemple non limitatif.

| Type de réaction | Réaction | Gamme de température (°C) |
|---|---|---|
| Dissociation catalytique | $2NH_3 \Leftrightarrow N_2 + 3H_2$ <br> $2SO_3 \Leftrightarrow 2SO_2 + O_2$ | 400 - 500 <br> 500 - 900 |
| Déshydratation d'hydroxyde | $Mg(OH)_2 \Leftrightarrow MgO + H_2O$ <br> $Ca(OH)_2 \Leftrightarrow CaO + H_2O$ <br> $Ba(OH)_2 \Leftrightarrow BaO + H_2O$ | 150 - 350 <br> 400 - 600 <br> 700 - 800 |
| Décarbonatation de carbonates | $MgCO_3 \Leftrightarrow MgO + CO_2$ <br> $CaCO_3 \Leftrightarrow CaO + CO_2$ | 350 - 450 <br> 650 - 850 |
| Réaction REDOX | $2Co_3O_4 \Leftrightarrow 6CoO + O_2$ <br> $2BaO_2 \Leftrightarrow BaO + O_2$ | 850 - 950 <br> 700 - 850 |
| Réformage de la vapeur | $CH_4 + H_2O \Leftrightarrow 3H_2 + CO$ <br> $CH_4 + CO_2 \Leftrightarrow 2H_2 + 2CO$ | 550 - 950 <br> 550 - 950 |
| Déshydrogénation d'hydrure métallique | $MgH_2 \Leftrightarrow Mg + H_2$ | 250 - 400 |

Les réactions sont choisies de sorte, qu'elles remplissent de préférence les critères suivants :

- une enthalpie de réaction $\Delta H_r$ importante et un petit volume molaire afin de maximiser la densité de stockage, de préférence compris entre 300-500 kWh.m$^{-3}$.
- les réactions sont complètement réversibles,
- les réactions sont rapides,
- Les produits sont facilement séparables et stables pendant la période de stockage,
- Les produits utilisés sont facilement manipulables.

La réaction Ba(OH)$_2$ ⇔ BaO + H$_2$O dont la gamme de température est comprise entre 700°C et 800°C peut être utilisé pour stocker la chaleur d'un caloporteur échauffé dans une centrale solaire à tour, qui peut échauffer de l'air jusqu'à 1000°C.

De manière avantageuse, les réacteurs en série peuvent être pour tout ou partie des réacteurs à lit fluidisés permettant de maîtriser les températures de sortie du caloporteur des réacteurs et de moduler la quantité de matériau de stockage thermique en fonction des variations de débit.

Le système de stockage thermique selon l'invention peut être utilisé de manière très avantageuse pour le stockage thermique issue d'un caloporteur dans d'une centrale solaire à concentration

Il peut également être utilisé pour stocker de l'énergie qui est habituellement perdue, telle que l'énergie thermique issue des gaz de combustion, tels que ceux produits dans les moteurs de bateau, d'avion, voiture, par des systèmes de chauffage des habitations, etc.

Il peut en outre être utilisé pour le stockage d'énergie thermique dans tous procédés industriels utilisant un caloporteur. Typiquement dans une unité de refroidissement, l'énergie récupérée pourra être stockée pour être restituée pour une autre application.

## Revendications

1. Système de stockage thermique par voie thermochimique comportant au moins un premier réacteur (8), un deuxième réacteur (10) et un circuit de circulation d'un caloporteur (12), de sorte à assurer des échanges thermiques avec un contenu des premier et deuxième réacteurs (8,10), ledit circuit de circulation comportant une première et une deuxième extrémité d'alimentation/d'évacuation (12.1, 12.2) et traversant les deux réacteurs de sorte que le caloporteur traverse successivement l'un parmi le premier (8) et le deuxième (10) réacteur puis l'autre parmi le deuxième (10) et le premier (8) réacteur, dans lequel chaque réacteur (8, 10) est destiné à être le siège d'une réaction réversible de stockage/déstockage par voie thermochimique, les deux réactions ayant des gammes de température respectives au moins en partie distinctes, le système étant **caractérisé en ce que** chaque réacteur (8,10) est connecté à des réservoirs d'entreposage (14,16, 24, 30, 34, 42) des matériaux participant aux réactions par des conduits de connexion (13, 15, 22, 28, 32, 40).

2. Système de stockage thermique selon la revendication 1, dans lequel le caloporteur présente une première température à la première extrémité du circuit de circulation (12) et une deuxième température à la deuxième extrémité du circuit de circulation (12) différente de la première température, les gammes de température respectives des réactions réversibles de stockage/déstockage par voie thermochimique couvrant sensiblement l'intervalle de température délimité par les première et deuxième température.

3. Système de stockage thermique selon la revendication 1, dans lequel chaque conduit de connexion (13, 15, 22, 28, 32, 40) comporte un ou des moyen(s) de chauffage du matériau (18, 20, 26, 36, 38, 44) qui circule dans celui-ci lorsqu'il alimente le réacteur (8, 10) auquel il est connecté, le ou les moyens de chauffage (18, 20, 26, 36, 38, 44) étant avantageusement formé(s) au moins en partie par un échangeur thermique (18.1, 20.1, 26.1, 26.2, 36.1, 38.1, 44.1, 44.2) de sorte à récupérer la chaleur du ou des matériaux sortant du ou des réacteurs (8, 10).

4. Système de stockage thermique selon la revendication 3, dans lequel au moins un échangeur thermique (18.1, 20.1, 26.1, 26.2, 36.1, 38.1, 44.1, 44.2) situé sur un conduit de connexion transportant du matériau vers le réacteur est relié à au moins un échangeur thermique (18.1, 20.1, 26.1, 26.2, 36.1, 38.1, 44.1, 44.2) situé sur un conduit de connexion évacuant du matériau ou des matériaux du réacteur résultant de la réaction ayant lieu dans le réacteur de sorte à transférer la chaleur récupérée de l'un des matériaux à l'autre matériau.

5. Système de stockage thermique selon l'une des revendications 1 à 4, dans lequel le ou les réacteurs (8, 10) est/sont un ou des réacteurs à lit fluidisé.

6. Centrale solaire comportant un champ solaire (2), un système de conversion (4) de l'énergie thermique produite par le champ solaire (2) en énergie électrique et au moins un système de stockage thermique selon l'une des revendications 1 à 5, le système de conversion (4) et le système de stockage étant connectés en parallèle avec le champ solaire.

**7.** Procédé de charge ou de décharge par voie thermochimique d'un système de stockage thermique selon l'une des revendications 1 à 5, comportant les étapes :

- circulation d'un caloporteur entrant à une première température dans un premier réacteur de sorte à échanger de l'énergie thermique avec au moins un premier matériau de stockage thermique contenu dans le premier réacteur, de sorte à provoquer une première réaction de stockage/déstockage par voie thermochimique dans une première gamme de température,
- circulation dudit caloporteur dans un deuxième réacteur, après avoir circulé dans le premier réacteur, de sorte à échanger de l'énergie thermique avec au moins un deuxième matériau de stockage thermique contenu dans le second réacteur, de sorte à provoquer une deuxième réaction de stockage/déstockage par voie thermochimique dans une deuxième gamme de température au moins en partie distincte de la première gamme de température, le caloporteur porteur sortant du deuxième réacteur avec une deuxième température.

**8.** Procédé de charge selon la revendication 7, dans lequel le caloporteur traverse le premier réacteur dans lequel a lieu la réaction de stockage thermique dont la borne de température supérieure de la gamme de température est supérieure à la borne supérieure de la gamme de température de la deuxième réaction ayant lieu dans le deuxième réacteur, puis le deuxième réacteur.

**9.** Procédé de décharge selon la revendication 7 ou 8, dans lequel le caloporteur traverse le deuxième réacteur dans lequel a lieu la réaction de stockage thermique dont la borne de température inférieure de la gamme de température est inférieure à la borne inférieure de la gamme de température de la première réaction ayant lieu dans le premier réacteur, puis le premier réacteur.

**10.** Procédé de charge selon l'une des revendications 7 à 9, dans lequel la température du caloporteur en sortie du premier réacteur est supérieure à celle en sortie du deuxième réacteur et dans lequel la température du caloporteur en sortie du premier réacteur est supérieure ou égale à la borne de température inférieure de la gamme de température de la première réaction et/ou la température du caloporteur en sortie du deuxième réacteur est supérieure ou égale à la borne de température inférieure de la gamme de température de la deuxième réaction

**11.** Procédé de décharge selon l'une des revendications 7 à 10, dans lequel la température du caloporteur en sortie du premier réacteur est supérieure à celle en sortie du deuxième réacteur et dans lequel la température du caloporteur en sortie du deuxième réacteur est inférieure ou égale à la borne de température supérieure de la gamme de température de la deuxième réaction et/ou la température du caloporteur en sortie du premier réacteur est inférieure ou égale à la borne de température supérieure de la gamme de température de la première réaction

**12.** Procédé de charge ou de décharge selon l'une des revendications 7 à 11, dans lequel le au moins premier matériau de stockage destiné à stocker ou à libérer de la chaleur alimente en continu le premier réacteur et les produits issus de la réaction sont évacués en continu et dans lequel le au moins deuxième matériau de stockage destiné à stocker ou à libérer de la chaleur alimente en continu le deuxième réacteur et les produits issus de la réaction sont évacués en continu et/ou dans lequel le au moins premier matériau et le au moins deuxième matériau sont chauffés avant d'entrer dans le premier et le deuxième réacteur respectivement.

**13.** Procédé de charge ou décharge selon l'une des revendications 7 à 12, dans lequel les réactions pouvant avoir lieu dans les réacteurs sont par exemple une réaction de dissociation catalytique, une réaction de déshydratation d'hydroxyde, une réaction de décarbonation de carbonates, une réaction de réformage de la vapeur ou une réaction de déshydrogénation d'hydrure métallique.

**14.** Procédé de charge ou décharge selon l'une des revendications 7 à 13, dans lequel le caloporteur s'écoulant dans le circuit de circulation en phase de charge a une température d'entrée de 565°C et de sortie de 300°C, le premier réacteur (8) étant le siège de la réaction d'hydratation/déshydratation

$Ca(OH)_2 + Q \Leftrightarrow CaO + H_2O$ dont la gamme de température est [400°C, 600°C], et
le deuxième réacteur (8) est le siège de la réaction d'hydratation/déshydratation
$Mg(OH)_2 + Q' \Leftrightarrow MgO + H_2O$ dont la gamme de température est [150°C, 350°C].

**EP 2 984 434 B1**

**Patentansprüche**

1. Thermochemisches Wärmespeichersystem mit zumindest einem ersten Reaktor (8), einem zweiten Reaktor (10) und einem Strömungskreislauf für einen Wärmeträger (12), so dass Wärmeaustauschvorgänge mit einem Inhalt des ersten und des zweiten Reaktors (8, 10) sichergestellt werden, wobei der Strömungskreislauf ein erstes und ein zweites Zulauf-/Ablaufende (12.1, 12.2) aufweist und durch die beiden Reaktoren tritt, so dass der Wärmeträger nacheinander einen aus erstem (8) und zweitem (10) Reaktor und dann den anderen aus zweitem (10) und erstem Reaktor (8) durchströmt, wobei jeder Reaktor (8, 10) dazu bestimmt ist, Herd einer reversiblen, thermochemischen Speicher-/Freigabereaktion zu sein, wobei die beiden Reaktionen jeweilige Temperaturbereiche haben, die sich zumindest teilweise unterscheiden, wobei das System **dadurch gekennzeichnet ist, dass** jeder Reaktor (8, 10) über Verbindungsleitungen (13, 15, 22, 28, 32, 40) mit Lagerbehältern (14, 16, 24, 30, 34, 42) für Materialien verbunden ist, die an den Reaktionen teilhaben.

2. Wärmespeichersystem nach Anspruch 1, wobei jeder Wärmeträger eine erste Temperatur an dem ersten Ende des Strömungskreislaufs (12) und eine zweite Temperatur an dem zweiten Ende des Strömungskreislaufs (12) aufweist, die sich von der ersten Temperatur unterscheidet, wobei die jeweiligen Temperaturbereiche der reversiblen, thermochemischen Speicher-/Freigabereaktionen im Wesentlichen die Temperaturspanne decken, die von der ersten und der zweiten Temperatur begrenzt wird.

3. Wärmespeichersystem nach Anspruch 1, wobei jede Verbindungsleitung (13, 15, 22, 28, 32, 40) eine oder mehrere Heizeinrichtungen (18, 20, 26, 36, 38, 44) für das Material enthält, das dann in dieser strömt, wenn es dem Reaktor (8, 10) zugeführt wird, mit dem sie verbunden ist, wobei die Heizeinrichtung bzw. Heizeinrichtungen (18, 20, 26, 36, 38, 44) vorteilhaft zumindest teilweise aus einem Wärmespeicher (18.1, 20.1, 26.1, 26.2, 36.1, 38.1, 44.1, 44.2) gebildet ist bzw. sind, so dass die Wärme des bzw. der aus dem bzw. den Reaktor(en) (8, 10) austretenden Materialien zurückgewonnen wird.

4. Wärmespeichersystem nach Anspruch 3, wobei zumindest ein Wärmespeicher (18.1, 20.1, 26.1, 26.2, 36.1, 38.1, 44.1, 44.2), der an einer das Material zum Reaktor führenden Verbindungleitung liegt, mit zumindest einem Wärmespeicher (18.1, 20.1, 26.1, 26.2, 36.1, 38.1, 44.1, 44.2) verbunden ist, der an einer Verbindungsleitung liegt, die Material bzw. Materialien vom Reaktor ableitet, das bzw. die sich aus der in dem Reaktor stattfindenden Reaktion ergibt/ergeben, so dass die zurückgewonnene Wärme von einem der Materialien an das andere Material überführt wird.

5. Wärmespeichersystem nach einem der Ansprüche 1 bis 4, wobei der bzw. die Reaktor(en) (8, 10) ein oder mehrere Wirbelbettreaktoren ist/sind.

6. Solarkraftwerk, enthaltend ein Solarfeld (2), ein Umwandlungssystem (4) zum Umwandeln von von dem Solarfeld (2) erzeugter Wärmeenergie in elektrische Energie und zumindest ein Wärmespeichersystem nach einem der Ansprüche 1 bis 5, wobei das Umwandlungssystem (4) und das Speichersystem mit dem Solarfeld parallel geschaltet sind.

7. Verfahren zum thermochemischen Laden bzw. Entladen eines Wärmespeichersystems nach einem der Ansprüche 1 bis 5, umfassend die Schritte:

   - Umwälzen eines Wärmeträgers, der mit einer ersten Temperatur in einen ersten Reaktor einströmt, so dass die Wärmeenergie mit zumindest einem ersten, im ersten Reaktor enthaltenen Wärmespeichermaterial ausgetauscht wird, so dass eine erste thermochemische Speicher-/Freigabereaktion in einem ersten Temperaturbereich hervorgerufen wird,
   - Umwälzen des Wärmeträgers in einem zweiten Reaktor, nachdem er im ersten Reaktor geströmt ist, so dass Wärmeenergie mit zumindest einem zweiten, in dem zweiten Reaktor enthaltenen Wärmespeichermaterial ausgetauscht wird, so dass eine zweite thermochemische Speicher-/Freigabereaktion in einem zweiten Temperaturbereich hervorgerufen wird, der sich zumindest teilweise von dem ersten Temperaturbereich unterscheidet, wobei der Wärmeträger mit einer zweiten Temperatur aus dem zweiten Reaktor austritt.

8. Ladeverfahren nach Anspruch 7, wobei der Wärmeträger den ersten Reaktor durchströmt, in welchem die Wärmespeicherreaktion stattfindet, deren obere Temperaturgrenze des Temperaturbereichs höher als die Obergrenze des Temperaturbereichs der zweiten Reaktion ist, die im zweiten Reaktor stattfindet, und dann den zweiten Reaktor durchströmt.

**9.** Entladeverfahren nach Anspruch 7 oder 8, wobei
der Wärmeträger den zweiten Reaktor durchströmt, in welchem die Wärmespeicherreaktion stattfindet, deren untere Temperaturgrenze des Temperaturbereichs niedriger als die Untergrenze des Temperaturbereichs der ersten Reaktion ist, die im ersten Reaktor stattfindet, und dann den ersten Reaktor durchströmt.

**10.** Ladeverfahren nach einem der Ansprüche 7 bis 9, wobei
die Temperatur des Wärmeträgers am Auslass des ersten Reaktors höher ist als die am Auslass des zweiten Reaktors und wobei die Temperatur des Wärmeträgers am Auslass des ersten Reaktors höher oder gleich der unteren Temperaturgrenze des Temperaturbereichs der ersten Reaktion ist und/oder die Temperatur des Wärmeträgers am Auslass des zweiten Reaktors höher oder gleich der unteren Temperaturgrenze des Temperaturbereichs der zweiten Reaktion ist.

**11.** Entladeverfahren nach einem der Ansprüche 7 bis 10, wobei
die Temperatur des Wärmeträgers am Auslass des ersten Reaktors höher ist als die am Auslass des zweiten Reaktors und wobei die Temperatur des Wärmeträgers am Auslass des zweiten Reaktors niedriger oder gleich der oberen Temperaturgrenze des Temperaturbereichs der zweiten Reaktion ist und/oder die Temperatur des Wärmeträgers am Auslass des ersten Reaktors niedriger oder gleich der oberen Temperaturgrenze des Temperaturbereichs der ersten Reaktion ist.

**12.** Lade- bzw. Entladeverfahren nach einem der Ansprüche 7 bis 11, wobei zumindest das erste Speichermaterial, das dazu bestimmt ist, Wärme zu speichern bzw. freizugeben, dem ersten Reaktor kontinuierlich zugeführt wird und die aus der Reaktion stammenden Reaktionsprodukte kontinuierlich abgeführt werden und wobei
zumindest das zweite Speichermaterial, das dazu bestimmt ist, Wärme zu speichern bzw. freizugeben, dem zweiten Reaktor kontinuierlich zugeführt wird und die aus der Reaktion stammenden Reaktionsprodukte kontinuierlich abgeführt werden und/oder
wobei zumindest das erste Material und zumindest zweite Material erhitzt werden, bevor sie in den ersten bzw. zweiten Reaktor einströmen.

**13.** Lade- bzw. Entladeverfahren nach einem der Ansprüche 7 bis 12, wobei die Reaktionen, die in den Reaktoren stattfinden können, beispielsweise eine katalytische Spaltungsreaktion, eine Hydroxid-Dehydratisierungsreaktion, eine Entcarbonisierungsreaktion von Carbonaten, eine Dampf-Reformierungsreaktion oder eine Metallhydrid-Dehydrierungsreaktion sind.

**14.** Lade- bzw. Entladeverfahren nach einem der Ansprüche 7 bis 13, wobei der Wärmeträger, der im Strömungskreislauf in der Ladephase strömt, eine Eintrittstemperatur von 565 °C und eine Austrittstemperatur von 300 °C hat, wobei der erste Reaktor (8) Herd der Hydratisierungs-/Dehydratisierungsreaktion

$Ca(OH)_2 + Q \Leftrightarrow CaO + H_2O$ ist, deren Temperaturbereich [400 °C, 600 °C] beträgt,
wobei der zweite Reaktor (8) Herd der Hydratisierungs-/Dehydratisierungsreaktion
$Mg(OH)_2 + Q' \Leftrightarrow MgO + H_2O$ ist, deren Temperaturbereich [150 °C, 350 °C] beträgt.

**Claims**

**1.** Thermochemical heat storage system comprising at least one first reactor (8), one second reactor (10) and a heat-transfer fluid circulation circuit (12), in order to provide for heat exchanges with contents of the first and second reactors (8, 10), said circulation circuit comprising a first and a second supply/discharge end (12.1, 12.2) and passing through the two reactors such that the heat-transfer fluid passes successively through either the first (8) or the second (10) reactor and subsequently through the other second (10) or first (8) reactor, wherein each reactor (8, 10) is intended to be the seat of a reversible thermochemical storage/release reaction, the two reactions having respective temperature ranges that are at least partially different, the system being **characterised in that** each reactor (8,10) is connected to storage reservoirs (14, 16, 24, 30, 34, 42) for storing the materials taking part in the reactions via connecting pipes (13, 15, 22, 28, 32, 40).

**2.** Heat storage system according to claim 1, wherein the heat-transfer fluid has a first temperature at the first end of the circulation circuit (12) and a second temperature at the second end of the circulation circuit (12) that is different to the first temperature, the respective temperature ranges of the reversible thermochemical storage/release reactions substantially covering the temperature interval defined by the first and second temperatures.

3.  Heat storage system according to claim 1, wherein each connecting pipe (13, 15, 22, 28, 32, 40) comprises one or more material heating means (18, 20, 26, 36, 38, 44) for heating the material that flows therein when the former supplies the reactor (8, 10) to which it is connected, the one or more heating means (18, 20, 26, 36, 38, 44) being advantageously formed at least partially by a heat exchanger (18.1, 20.1, 26.1, 26.2, 36.1, 38.1, 44.1, 44.2) in order to recover the heat from the one or more materials exiting the one or more reactors (8, 10).

4.  Heat storage system according to claim 3, wherein at least one heat exchanger (18.1, 20.1, 26.1, 26.2, 36.1, 38.1, 44.1, 44.2) situated on a connecting pipe carrying material to the reactor is connected to at least one heat exchanger (18.1, 20.1, 26.1, 26.2, 36.1, 38.1, 44.1, 44.2) situated on a connecting pipe removing the one or more materials from the reactor and produced by the reaction taking place inside the reactor in order to transfer the recovered heat from one of the materials to the other.

5.  Heat storage system according to one of claims 1 to 4, wherein the one or more reactors (8, 10) is/are one or more fluidised bed reactors.

6.  Solar power station comprising a solar field (2), a conversion system (4) for converting the heat energy generated by the solar field (2) into electrical energy and at least one heat storage system according to one of claims 1 to 5, the conversion system (4) and the storage system being connected in parallel with the solar field.

7.  Method for the thermochemical charging or draining of a heat storage system according to one of claims 1 to 5, comprising the steps of:

    - circulating a heat-transfer fluid fed at a first temperature into a first reactor in order to exchange heat energy with at least one first heat storage material contained in the first reactor, in order to trigger a first thermochemical storage/release reaction within a first temperature range,
    - circulating said heat-transfer fluid in a second reactor, after having circulated in the first reactor, in order to exchange heat energy with at least one second heat storage material contained in the second reactor, in order to trigger a second thermochemical storage/release reaction within a second temperature range that is at least partially different from the first temperature range, the heat-transfer fluid exiting the second reactor having a second temperature.

8.  Charging method according to claim 7, wherein the heat-transfer fluid passes through the first reactor, in which takes place the heat storage reaction, the upper temperature bound of the temperature range of which is greater than the upper bound of the temperature range of the second reaction taking place in the second reactor, then the second reactor.

9.  Draining method according to either claim 7 or claim 8, wherein the heat-transfer fluid passes through the second reactor, in which takes place the heat storage reaction, the lower temperature bound of the temperature range of which is less than the lower bound of the temperature range of the first reaction taking place in the first reactor, then the first reactor.

10. Charging method according to one of claims 7 to 9, wherein the temperature of the heat-transfer fluid at the exit of the first reactor is greater than that at the exit of the second reactor, and wherein the temperature of the heat-transfer fluid at the exit of the first reactor is greater than or equal to the lower temperature bound of the temperature range of the first reaction and/or the temperature of the heat-transfer fluid at the exit of the second reactor is greater than or equal to the lower temperature bound of the temperature range of the second reaction.

11. Draining method according to one of claims 7 to 10, wherein the temperature of the heat-transfer fluid at the exit of the first reactor is greater than that at the exit of the second reactor, and wherein the temperature of the heat-transfer fluid at the exit of the second reactor is less than or equal to the upper temperature bound of the temperature range of the second reaction and/or the temperature of the heat-transfer fluid at the exit of the first reactor is less than or equal to the upper temperature bound of the temperature range of the first reaction.

12. Charging or draining method according to one of claims 7 to 11, wherein the at least first storage material intended to store or release heat continuously supplies the first reactor and the products produced by the reaction are continuously removed, and wherein the at least second storage material intended to store or release heat continuously supplies the second reactor and the products produced by the reaction are continuously removed, and/orwherein the at least first material and the at least second material are heated before entering the first and second reactors respectively.

13. Charging or draining method according to one of claims 7 to 12, wherein the reactions that can take place inside the reactors are, for example, a catalytic decomposition reaction, a hydroxide dehydration reaction, a carbonate decarbonisation reaction, a steam reforming reaction or a metal hydride dehydrogenation reaction.

14. Charging or draining method according to one of claims 7 to 13, wherein the heat-transfer fluid flowing in the circulation circuit during the charging phase has an input temperature of 565°C and an output temperature of 300°C, the first reactor (8) being the site of the hydration/dehydration reaction

$Ca(OH)_2 + Q \Leftrightarrow CaO + H_2O$, the temperature range of which is [400°C, 600°C], and
the second reactor (8) is the site of the hydration/dehydration reaction
$Mg(OH)_2 + Q' \Leftrightarrow MgO + H_2O$, the temperature range of which is [150°C, 350°C].

12.1

Tc

8

T1

Q1

A1 + Q1 (T≥T1) ⇔ B1 +C1

12.2

Ts

12

10

Q2

A2 + Q2 (T≥Ts) ⇔ B2 +C2

FIG.1A

12.2

Ts

8

T1

Q2

B2 + C2 => A2 + Q2

12.1

Tc

12

10

Q1

B1 + C1 => A1 + Q1

FIG.1B

FIG.1C

FIG.1D

FIG.2A

FIG.2B

FIG.3

FIG.4

EP 2 984 434 B1

FIG.5

**EP 2 984 434 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011054676 A
- DE 102012204722 A1